(19) Europäisches Patentamt
European Patent Office
Office européen des brevets

(11) **EP 4 047 382 A1**

(12) **EUROPEAN PATENT APPLICATION**

(43) Date of publication:
**24.08.2022 Bulletin 2022/34**

(21) Application number: **22155841.4**

(22) Date of filing: **09.02.2022**

(51) International Patent Classification (IPC):
**G01S 5/02** *(2010.01)* **H04W 64/00** *(2009.01)*

(52) Cooperative Patent Classification (CPC):
**G01S 5/02524; G01S 5/02525; G01S 5/02526; G01S 5/02527**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.02.2021 FI 20215167**

(71) Applicant: **Nokia Technologies Oy**
**02610 Espoo (FI)**

(72) Inventors:
• **BUTT, Muhammad Majid**
**Palaiseau (FR)**
• **FEKI, Afef**
**Sceaux (FR)**
• **CAPDEVIELLE, Veronique**
**Magny les Hameaux (FR)**
• **SYED MUHAMMAD, Fahad**
**Orsay (FR)**

(74) Representative: **Nokia EPO representatives**
**Nokia Technologies Oy**
**Karakaari 7**
**02610 Espoo (FI)**

(54) **RF-FINGERPRINTING MAP UPDATE**

(57) Apparatuses and methods in a communication system are disclosed. Data on error between the location of more than one user terminal and the estimated location of the more than one user terminal is obtained (500), the estimated location obtained utilising radio frequency fingerprinting. It is evaluated (502) whether the error is greater than a given threshold, and if so it is determined (504) whether the error is due to radio frequency fingerprinting or not. Based on the determination decision (506) is made on initialising update of radio frequency fingerprinting map.

FIG. 5

EP 4 047 382 A1

## Description

### Field

The exemplary and non-limiting embodiments of the invention relate generally to wireless communication systems. Embodiments of the invention relate especially to apparatuses and methods in wireless communication networks.

### Background

Wireless telecommunication systems are under constant development. New services are being developed. One feature which has been under interest is utilising knowledge of the position of user terminals. The possibility to determine the location of user terminals accurately and reliably even when satellite positioning services are not available is of interest.

One positioning technology which has been developed is radio frequency, RF, fingerprinting. In RF fingerprinting, radio characteristics of a particular area are mapped on its physical location, for example to xy-coordinates. When the radio characteristics of a user terminal are known, the location of the user terminal may be determined. This is useful in many use cases, including UE localization, proactive mobility/handover and various location-based resource allocation functions.

The theory of RF fingerprinting has been known for many years and it has been in use in communication, but recent advances in Machine Learning, ML, have resulted in growing interest in RF fingerprinting based methods. Intelligent computing algorithms utilising ML help in increasing accuracy to map characteristics of RF data to physical locations.

RF fingerprinting relies in part to a map where the UE radio characteristics are linked to locations. If this mapping is outdated, the fingerprinting cannot produce reliable results. The mapping may change due to changed environment conditions. Therefore, the mapping may be updated from time to time. However, the map update is a costly and time-consuming procedure so it should be done only when needed.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided and apparatus of claim 1.

According to an aspect of the present invention, there is provided a method of claim 5.

According to an aspect of the present invention, there is provided a computer programs comprising instructions of claim 9.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which

Figures 1 and 2 illustrate examples of simplified system architecture of a communication system;
Figure 3 illustrates an example of an RF fingerprinting solution;
Figure 4 illustrates an example of raw raytracing data;
Figures 5, 6, 7 and 8 are flowcharts illustrating some embodiments;
Figures 9A illustrates correlation coefficient values;
Figure 9B is a flowchart illustrating an embodiment;
Figures 10A, 10B and 10C illustrate cumulative distribution functions CDF for various combinations;
Figure 11 illustrates an embodiment utilizing neural network; and
Figures 12, 13A and 13B illustrate simplified examples of apparatuses applying some embodiments of the invention.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

Some embodiments of the present invention are applicable to a user terminal, a communication device, a base station, eNodeB, gNodeB, a distributed realisation of a base station, a network element of a communication system, a corresponding component, and/or to any communication system or any combination of different communication systems that support required functionality.

The protocols used, the specifications of communication systems, servers and user equipment, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof. 3GPP (3rd Generation Partnership Project) is an organization that is co-ordinating the development of many wireless communication systems such as 5G or NR.

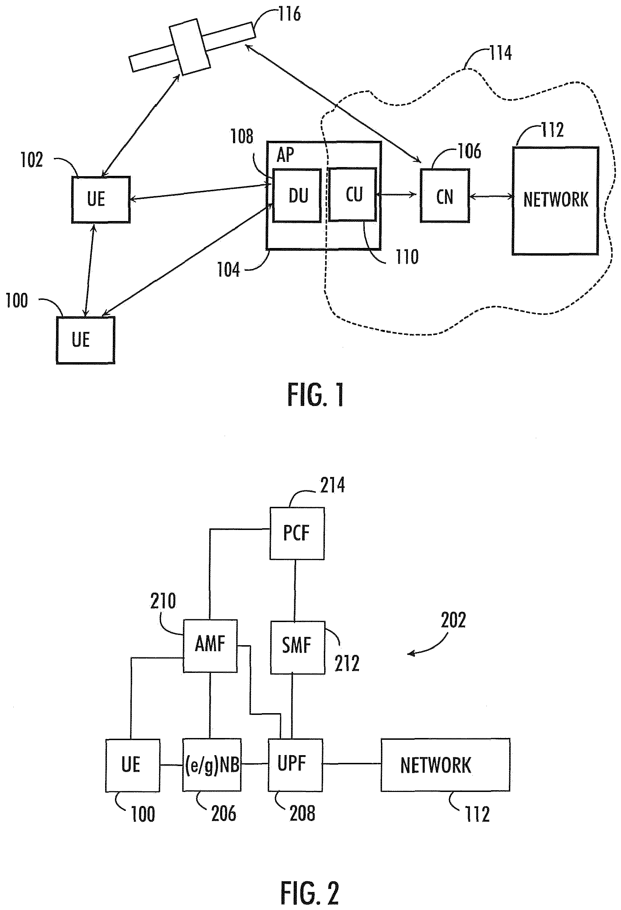

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. The devices 100 and 102 may, for example, be user devices or user terminals. The devices 100 and 102 are configured to be in a wireless connection on one or more communication channels with a node 104. The node 104 is further connected to a core network 106. In one example, the node 104 may be an access node, such as (e/g)NodeB, serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC).

The device (also called a subscriber unit, user device, user equipment (UE), user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device ( e.g. a portable or non-portable computing device) that includes wireless mobile communication devices operating with or without an universal subscriber identification module (USIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G or NR (New Radio) enables using multiple input - multiple output (MIMO) antennas, many more base stations or nodes than the Long Term Evolution, LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual subnetworks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication 116 to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 100 communicating via a 5G network 202 with a data network 112. The user terminal 100 is connected to a Radio Access Network RAN node, such as (e/g)NodeB 206 which provides the user terminal a connection to the network 112 via one or more User Plane Functions 208. The user terminal 100 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function 214 which is configured to govern network behavior by providing policy rules to control plane functions.

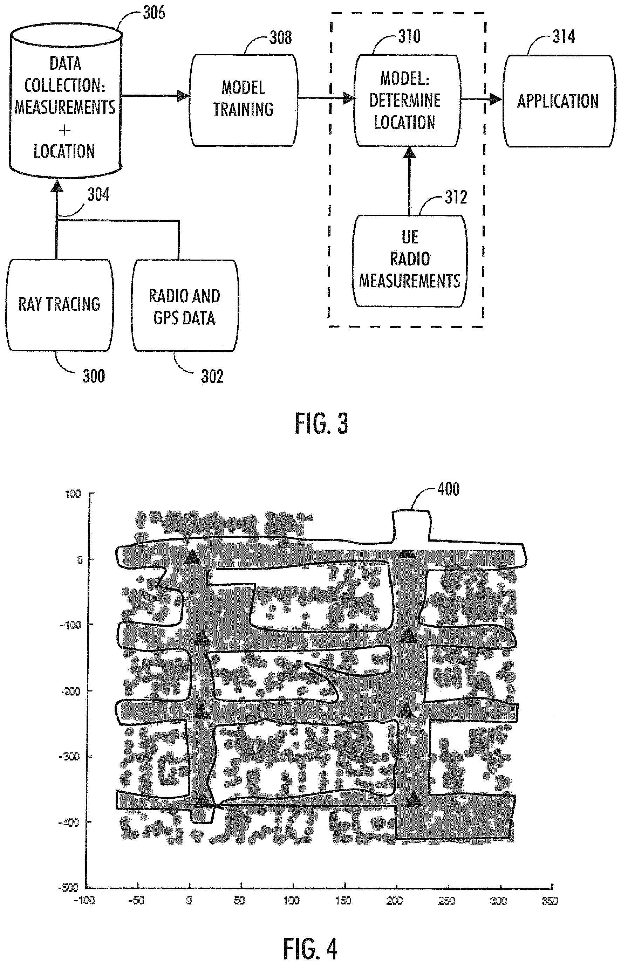

Fig. 3 illustrates an example of an RF fingerprinting solution. First a RF fingerprinting is created.

In an embodiment, a ray tracing tool 300 may be used, based on realistic maps, get measurements on each coordinate of the map of the selected area under study. Measurements of radio signals and satellite positioning data 302 may be utilised. The measurements may be obtained from user terminals in test or experimental mode in known locations. This raw data is stored in a database and the fed to a system level simulator 306 that generates Reference Signal Receive Power (RSRP) for beams from both serving and neighbouring gNBs for each coordinate of the selected geolocation. The generated data serves as an RF fingerprint for each xy-coordinate of the selected geolocation area. This generated RSRP data may then be used as an input for ML training where an ML model 308 for enabling UE positioning based on radio characteristics is created. The above actions may be performed "offline" meaning that the data and model may be gathered and created in laboratory prior taking the system into use.

Next, when the system is taken into use, radio measurement data 312 from user terminals is received by an analysis tool 310. The tool uses the trained model to determine the locations of the user terminals based on the radio measurement data received from user terminals. The location data may be utilised in various applications 314.

Fig. 4 illustrates an example of raw raytracing data for a particular area. The dots illustrate line of sight data (marked as area 400) and non line of sight data (outside marked area 400). In this example, these measurements have been taken at horizontal resolution of 1m. However, the resolution depends on the application requirement. ML algorithm is heavily dependent on accuracy and amount of data collected for RF fingerprinting. All the inaccuracies in RF fingerprinting result in increase in error when ML model is trained and consequently, inference error increases as well.

Besides the problem of insufficient or inaccurate RF fingerprinting, the RF fingerprinting map created as described above may be outdated after some time. Due to change in environment conditions, RF-fingerprinting may not be valid anymore. This is even more problematic in mmWave scenarios where small obstacles can have huge impact on RF environment for a particular area. Therefore, for all the fingerprinting based applications, the problem of RF measurement map update and ML model retraining is persistent.

However, problem with the triggering of RF fingerprinting map update/augmentation is that sometimes map update may be triggered when the performance degradation is not due to an outdated RF map. Thus, default assumption that any performance degradation is due to outdated RF fingerprinting is over simplified and not necessarily correct. Doing RF map update is costly, as Fig. 3 illustrates, and is not the solution of the problem in all situations. Some of these situations are temporary and beyond the control of RF fingerprinting solutions, such as input measurement/reporting errors.

If RF fingerprinting trigger is done too early and ML solution error is due to some other error source, the map update is unnecessary. The RF map update takes a few GBs of data transmission from the user terminals over communication links. The most likely cause of early triggering of RF fingerprinting is that error detection system believes that the large amount of application errors cause are due to RF fingerprinting and this assumption is wrong. On the other hand, late triggering of RF map update implies severe errors in RF fingerprinting based applications and the performance will suffer. Therefore, it is important to decide when RF fingerprinting map update is needed and when not and trigger the update only when deeded.

In an embodiment, the purpose is to reduce probability of false triggering of RF fingerprinting map update by checking for other more probable error sources, such as RSRP measurement or RSRP reporting error. This aims to minimize the probability of early or false triggering of RF fingerprinting map. If the error in RF fingerprinting location estimation is due to other error source, updating RF fingerprinting map will not solve the problem.

There may be various error sources that may cause false triggering of RF fingerprinting map update. For example, a short-term blockage on or near signal path between transmitter and receiver, due to a vehicle, for example, may cause a change in RF fingerprinting. This kind of situation may case temporary problems but will be resolved automatically when the blockage is removed. In following, RSRP reporting error is used as a non-limiting example of such an error source.

In an embodiment, the determining whether RF fingerprinting map update is needed or not involves periodic evaluation of error between the user terminal location and the RF fingerprinting map based estimated location the user terminal is performed over a set of user terminals in test mode.

A set of user terminals, the set comprising more than one user terminal, are used in test mode. These test user terminals are configured to know their exact geolocation with high accuracy either by satellite positioning system or fixing the locations, for example. These user terminals may be chosen in terms of their geo distribution such that they provide a good sample for a realistic network condition.

Each user terminal of the set of user terminals in test mode, determine its location utilising RF fingerprinting. The user terminals perform Reference Signal Receive Power, RSRP, measurements and determine an estimate of the location based on the measurements. This estimated location is compared with the known location. If the error is greater than a given threshold, an inference error is detected. In an embodiment, the results may be averaged over several time slots or over a given time interval.

Based on results from user terminals of the set of user terminals in test mode, it may be determined if RF fingerprinting map update is required or not. In an embodiment, evaluation may be performed on multiple instances of error detection from a particular user terminal to remove time correlation, and space correlation may be reduced by selection of the set of user terminals.

The RF fingerprinting map maps RSRP values obtained by a user terminal to an estimate of the location of the user terminal as XY-coordinates of the user terminal.

In ML inference, the RSRP values are observed and user terminal coordinates (X,Y) are evaluated. The error between the known location $(X_1, Y_1)$ and estimated location $(\hat{X}_1, \hat{Y}_1)$ may be computed by

$$ e = \sqrt{(X_1 - \hat{X}_1)^2 + (Y_1 - \hat{Y}_1)^2} $$

There is an inherent mean inference error produced by the trained ML model. Thus, if the calculated error is equal or below the inherent mean inference error, it is considered inference error and no action is taken.

Similar measurements from the same user terminal over time as well as other user terminals in the same area may be collected. In an embodiment, some statistical measures may be used to declare RF map inaccuracy. As an example, two possible methods are described as follows:

In one method, if the error $e$ is greater than a given threshold $\varepsilon$ (which is greater than the inherent mean inference error produced by the trained ML model) for a particular measurement, a localization inference error is declared for this measurement. For a given number $N$ such temporally and spatially different measurements, if error ratio over all the measurements is greater than a given threshold $\gamma$, RF fingerprinting map update can be triggered. The variables $N$, $\varepsilon$ and $\gamma$ are system variables.

In another method an error vector $E = [e_1, e_2, ...]$ may be formed by collecting all temporally and spatially diverse measurements. If mean error is greater than a given threshold $\beta$, RF fingerprinting map update can be triggered.

The above procedure does not consider issues where the error is not due to errors in RF fingerprinting map. Prior art in ML error detection will not differentiate between these. One of the most likely other sources of error in this application is RSRP reporting error. If the error $e$ is due to RSRP reporting error and RF fingerprinting map update is triggered by mistake, it will be costly operation for the network. Therefore, it is highly beneficial to find out the cause of the error.

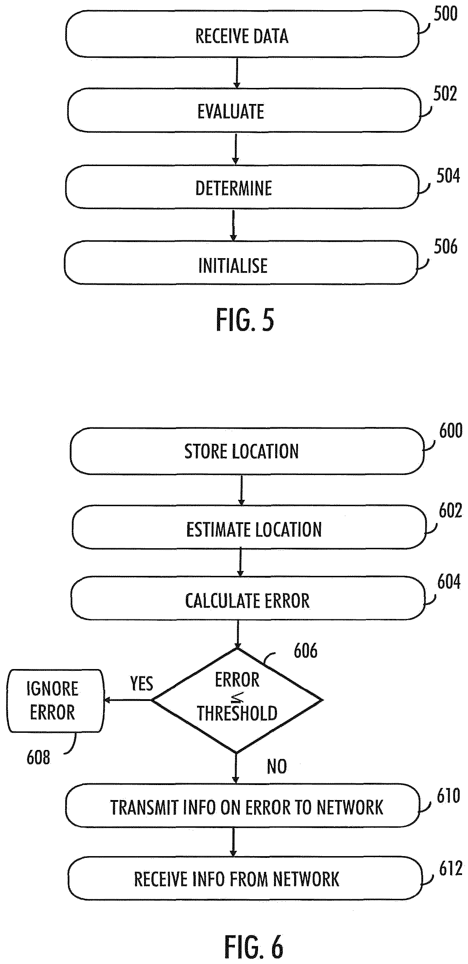

The flowchart of Fig. 5 illustrates an embodiment. The flowchart illustrates an example of an embodiment applied at an apparatus, such as a network element. In an embodiment, the network element is an gNodeB or a part of the gNodeB.

In step 500, the apparatus is configured to receive data on error between the location of more than one user terminal and the estimated location of the more than one user terminal, the estimated location obtained utilising radio frequency fingerprinting.

In step 502, the apparatus is configured to evaluate whether the error is greater than a given threshold. If not, the error is ignored.

Otherwise, the process continues in step 504, where the apparatus is configured to determine whether the error is due to radio frequency fingerprinting or not. There may be various other reasons for the error. For example, the error may be due to error(s) in user terminal measurements or measurement reporting. The error may be due to errors in RSRP measurement or RSRP reporting, for example. The error may be further due to a short-term blockage on or near signal path, for example.

In step 506, the apparatus is configured to make decision on updating of radio frequency fingerprinting map based on the determination.

The flowchart of Fig. 6 illustrates an embodiment. The flowchart illustrates an example of the operation of an apparatus. In an embodiment, the apparatus may be a terminal device or user equipment, a part of a terminal device or user equipment or any other apparatus capable of executing following steps.

In step 600, the apparatus is configured to store the location of the apparatus. The location may be determined by using a satellite positioning system or the location of the apparatus may be fixed, for example.

In step 602, the apparatus is configured to estimate location of the apparatus utilising radio frequency fingerprinting.

In step 604, the apparatus is configured to calculate the error between the location of apparatus and the estimated location of the apparatus.

In step 606, the apparatus is configured to determine whether the calculated error is smaller or equal than a given threshold.

If so, the apparatus is in step 608 configured to ignore the error.

If not, the apparatus is in step 610 configured to transmit to network information on the error between the location of the apparatus and the estimated location of the apparatus.

In step 612, the apparatus is configured to receive from the network information whether updating of radio frequency fingerprinting map is initialised or not.

There are various ways of dividing tasks related to location estimation and error evaluation. In an embodiment, the location estimation is performed at the user terminals and the error evaluation at network side. In an embodiment, both tasks are performed at the network side.

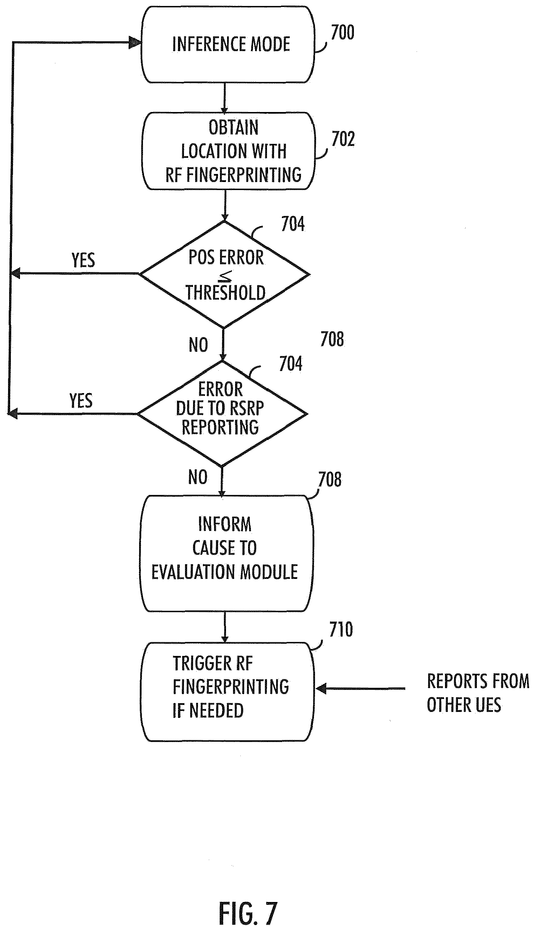

The flowchart of Fig. 7 illustrates an embodiment where both tasks are performed at the network side. The flowchart illustrates an example of an embodiment applied at an apparatus, such as a network element. In an embodiment, the network element is an gNodeB or a part of the gNodeB. The procedure is illustrated regarding one user terminal.

The procedure starts in step 700. The apparatus is configured to store the location of a user terminal and direct the user terminal to perform periodic checks.

In step 702 the apparatus is configured to receive from the user terminal estimated location of the user terminal, the estimation being performed by using RF fingerprinting.

In step 704, the apparatus is configured to calculate the error between the location of the user terminal and the estimated location of the user terminal and determine whether the error is smaller or equal than a given threshold. If so, the error is ignored.

If not, in step 706 the apparatus is configured to determine whether the error is due to other source than erroneous RF fingerprinting map, such as RSRP reporting error. If so, the error is ignored.

If not, in step 708 the apparatus is configured to receive corresponding data from other user terminals and determine if updating of RF fingerprinting map is needed.

Thus, in the above procedure the updating of RF fingerprinting map is performed only if the errors in the fingerprinting are due to erroneous map.

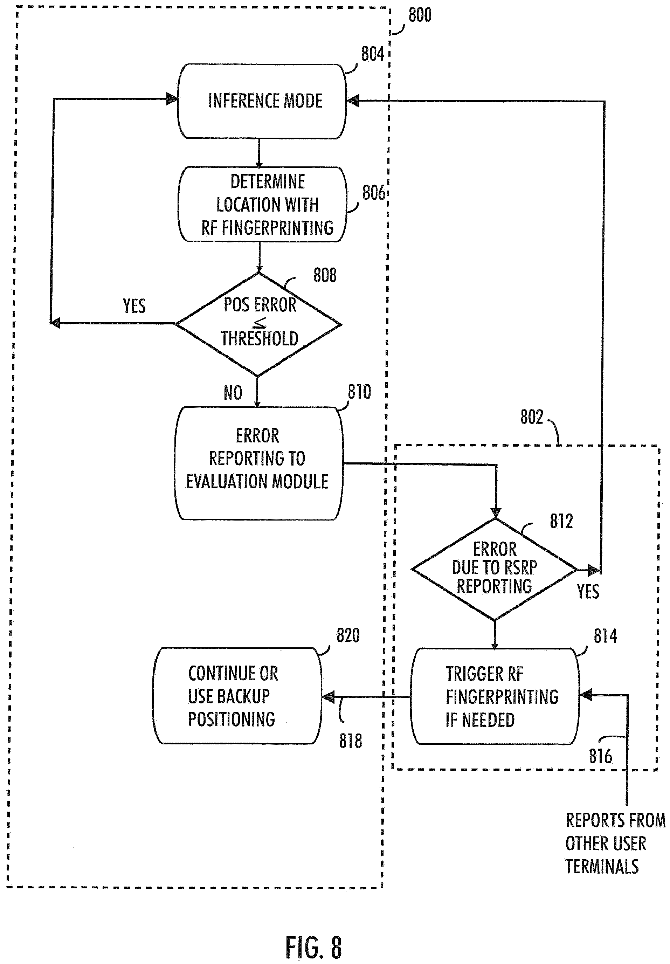

The flowchart of Fig. 8 illustrates an embodiment where the location estimation is performed at the user terminals and the error evaluation at network side. The flowchart illustrates actions 800 performed by a user terminal and actions 802 performed at the network side.

The procedure starts in step 804. The user terminal is configured to store the location of a user terminal and perform periodic checks.

In step 806 the user terminal is configured to estimate the location of the user terminal utilising RF fingerprinting.

In step 808, the user terminal is configured to calculate the error between the location of the user terminal and the estimated location of the user terminal and determine whether the error is smaller or equal than a given threshold. If so, the error is ignored.

If not, in step 810 the apparatus is configured to report information on the error to the network.

In step 812, the network apparatus, such as a gNB, is configured to determine whether the error is due to other source than erroneous RF fingerprinting map, such as RSRP reporting error. If so, the error is ignored regarding RF fingerprinting. The possible RSRP reporting error may be handled by the network but that is a separate issue.

If not, in step 814 the network apparatus is configured to receive corresponding data 816 from other user terminals and determine if updating of RF fingerprinting map is needed or not. If update is initiated, a backup positioning method, which may be network assisted may be used by the user terminals.

The network apparatus, such as a gNB, is configured to inform 818 the user terminal if the updating of radio frequency fingerprinting map is initialised or not.

The user terminal receives the message and, depending on the message, continues using RF fingerprinting (if the map is not to be updated) or utilise a backup positioning method.

Thus, also in the above procedure the updating of RF fingerprinting map is performed only if the errors in the fingerprinting are due to erroneous map.

RSRP reporting error detection can be performed in various ways. Below two examples are discussed.

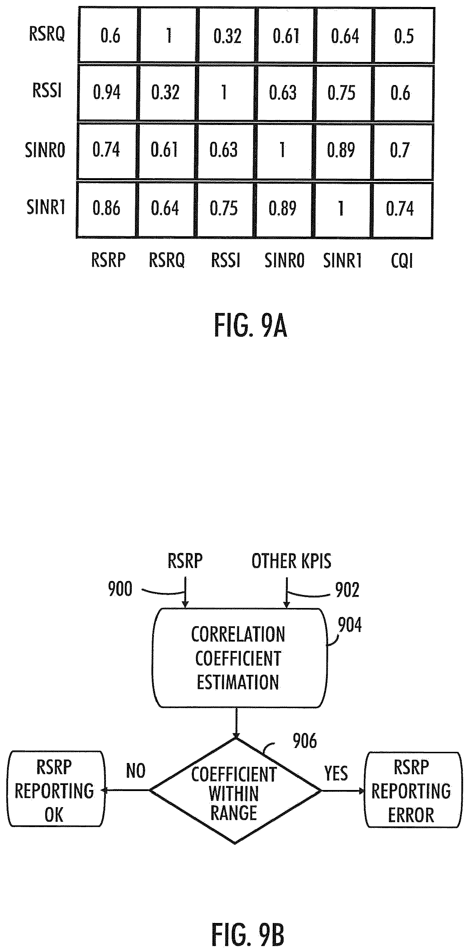

The inventors have evaluated that there is high correlation between various user terminal measurement reports. Fig. 9A is a chart illustrating Pearson correlation coefficient (PCC) values between RSRP measurements and various Key Performance indicators, KPIs, such as Channel Quality Indicator CQI, received Signal Strength Indicator RSSI, Signal to Noise Ratio SINR1, SINR2, Reference Signal Received Quality RSRQ.

Fig.9A shows that PCCs between RSRP measurements and various KPIS as follows (the numbers in Fig.9A have been truncated for clarity):

| | |
|------|----------|
| RSSI | 0.941345 |
| SINR1 | 0,858946 |
| SINR0 | 0,743763 |
| CQI | 0,686804 |
| RSRQ | 0,596585 |

PCCs between other measurements, e.g., between CQI and RSSI can also be computed.

In an embodiment, a range of acceptable PCC values between these measurements is to be determined. Fig. 9B illustrates an example.

RSRP values 900 are determined and also values 902 for other KPIs. The correlation coefficients are calculated 904. If the correlation coefficients are within range considered normal, it may be assumed 906 that RSRP reporting error is the cause for the error between the known location of user terminal and the estimated location of the user terminal.

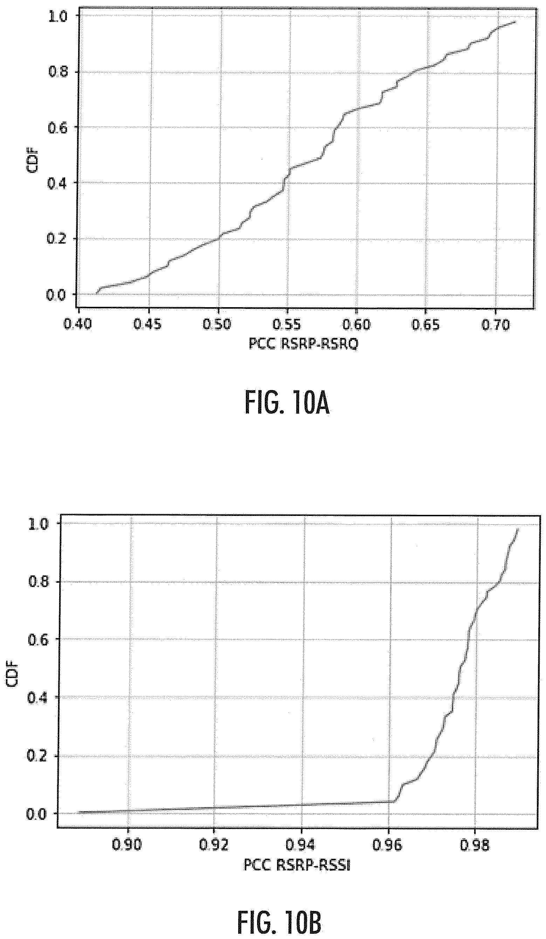

Figs. 10A - 10C illustrate cumulative distribution functions CDF for various combinations.

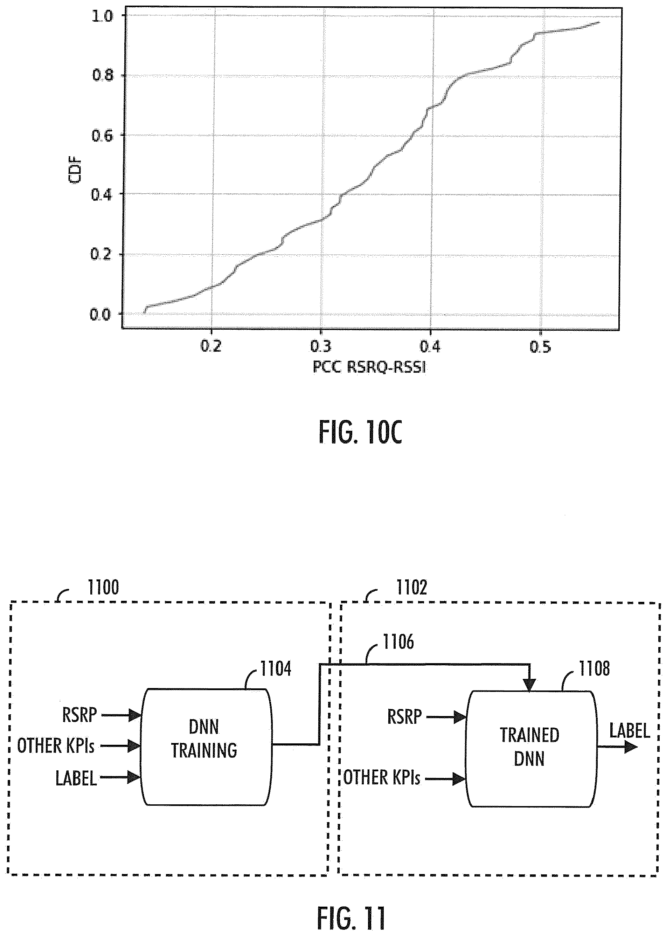

Fig. 10A illustrates cumulative distribution function CDF for PCC RSRP - RSRQ. Fig. 10B illustrates CDF for PCC RSRP-RSSI range, and Fig. 10C illustrates CDF for PCC RSRQ-RSSI range.

From Fig. 10A and 10B, it is clear that there is high correlation between RSRP and RSSI and its range varies between 0.9-0.99 with mean approximately 0.98, while correlation range between RSRP and RSRQ is 0.4-0.75 with mean nearly 0.55.

Based on the figures, for RSRP-RSSI correlation, we may define a normal range within ±0.02 of the mean. For RSRP-RSRQ it may be defined as ±0.05 of mean. For example, for a particular RSRP measurement, if RSRP-RSSI correlation is 0.9 and RSRP-RSRQ correlation turns out to be 0.4, it is out of normal range correlation for both. If we compute PCC between RSSI and RSRQ and it is within the normal range (Fig. 10C approximately mean value of 0.35), it implies that RSRP measurement reporting is erroneous.

Thus, if the PCC is within the normal range, measurement reports are believed to be correct with high probability. If not, the error could be in any of the measurement reports. To remove ambiguity, PCC may be computed with other parameters for both parameters whose PCC was low. If PCC is within the range for one of the parameters, but not for the other, we can identify the parameter with reporting error.

For example, assume that PCC between RSRP and RSSI is out of the normal range defined. When PCC for RSSI and CQI is computed, it is within the normal range, but it could be out of the normal range for CQI and RSRP. In this case, it is highly likely that RSRP reporting error is large.

In this case, this RF fingerprinting module will assume that large error between the known location of user terminal and the estimated location of the user terminal is more likely due to RSRP reporting error and will record this information to combine with evaluations for other test user terminals.

A more informed decision for RF fingerprinting map update may be made based on collective information. For example, if RSRP reporting error is large only for some of the user terminals, but not all, it may be determined that the error source is local to those user terminals and RF fingerprinting map update is not needed.

Another possible solution for RSRP reporting error detection is to use supervised learning-based ML model for determining a possible error in RSRP reporting. Fig. 11 illustrates a possible realisation of this alternative.

In this alternative, a ML model such as a Deep Neural Network, DNN, may be utilised. The process comprises a training phase 1100 followed by a use phase 1102. The training phase may be performed offline.

In the training phase, the network comprises as inputs labelled data. The input comprises RSRP 1110, other KPIs 1112, which may be the same as in the previous alternative, and a label input 1114, where label is 1 if for a combination of RSRP and any other KPI (e.g., CQI), an error is detected in RSRP measurement report and zero otherwise. Large amount of data may be collected and labelled manually and the DNN model needs to be trained on for each combination of RSRP values and KPIs.

In an embodiment, for an input tuple (Reported RSRP, CQI, RSSI, UE location (X,Y)) and output= 0/1, the DNN model is trained with a label data which is 1 if reported RSRP is within $\pm \propto$ dB of the measured RSRP, and 0 otherwise, where $\propto$ is a system variable.

In the inferenced/use phase, the inference can be performed in real time where a classification is made on whether the reported RSRP has an error > |±∝| dB.

This is performed with an input tuple (Reported RSRP, CQI, RSSI, UE location (X,Y)) and output is measurement error = 1 or 0.

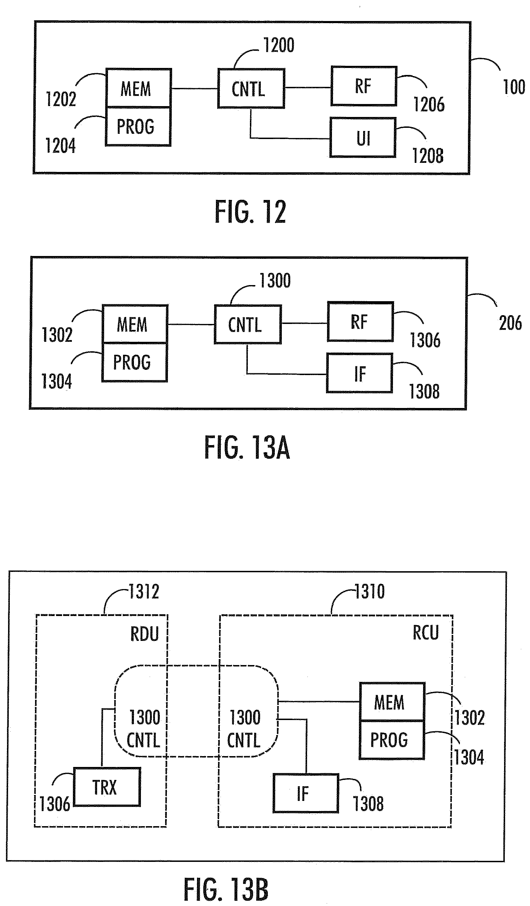

Figs. 12, 13A and 13B illustrate embodiments. The figures illustrate a simplified example of an apparatus applying embodiments of the invention. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

Fig. 12 illustrates an example of an apparatus which may be user equipment or terminal device 100 or a part of user equipment or a terminal device.

The apparatus 100 of the example includes a control circuitry 1200 configured to control at least part of the operation of the apparatus.

The apparatus may comprise a memory 1202 for storing data. Furthermore, the memory may store software 1204 executable by the control circuitry 1200. The memory may be integrated in the control circuitry.

The apparatus may comprise one or more interface circuitries 1206, 1208. The interface circuitries are operationally connected to the control circuitry 1200. An interface circuitry 1206 may be a set of transceivers configured to communicate with a RAN node such as an (e/g)NodeB of a wireless communication network. The interface circuitry may be connected to an antenna arrangement (not shown). The apparatus may also comprise a connection to a transmitter instead of a transceiver. The apparatus may further comprise a user interface 1208.

In an embodiment, the software 1204 may comprise a computer program comprising program code means adapted to cause the control circuitry 1200 of the apparatus to realise at least some of the embodiments described above.

Fig. 13A illustrates an example of an apparatus which may be a base station, gNodeB 206 or a part of base station or gNodeB.

The apparatus 206 of the example includes a control circuitry 1300 configured to control at least part of the operation of the apparatus.

The apparatus may comprise a memory 1302 for storing data. Furthermore, the memory may store software 1304 executable by the control circuitry 1300. The memory may be integrated in the control circuitry.

The apparatus may comprise one or more interface circuitries 1306. The interface circuitries are operationally connected to the control circuitry 1300. An interface circuitry 1306 may be a set of transceivers configured to communicate wirelessly with terminal devices or user equipment of a wireless communication network. The interface circuitry may be connected to an antenna arrangement (not shown). The apparatus may also comprise a connection to a transmitter instead of a transceiver. The apparatus may further comprise an interface configured to communicate with other network elements such a core network or other corresponding apparatuses, for example a user interface.

In an embodiment, the software 1304 may comprise a computer program comprising program code means adapted to cause the control circuitry 1300 of the apparatus to realise at least some of the embodiments described above.

In an embodiment, as shown in Fig. 13B, at least some of the functionalities of the apparatus of Fig. 13A may be shared between two physically separate devices, forming one operational entity. Therefore, the apparatus may be seen to depict the operational entity comprising one or more physically separated devices for executing at least some of the described processes. Thus, the apparatus of Fig. 13B, utilizing such shared architecture, may comprise a remote control unit RCU 1310, such as a host computer or a server computer, operatively coupled (e.g. via a wireless or wired network) to a remote distributed unit RDU 1312 located in the (e/g)NodeB. In an embodiment, at least some of the described processes may be performed by the RCU 1310. In an embodiment, the execution of at least some of the described processes may be shared among the RDU 1312 and the RCU 1310.

In an embodiment, the RCU 1310 may generate a virtual network through which the RCU 1310 communicates with the RDU 1312. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RDU and the RCU. In practice, any digital signal processing task may be performed in either the RDU or the RCU and the boundary where the responsibility is shifted between the RDU and the RCU may be selected according to implementation.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, an apparatus in a communication system comprising means for obtaining data on error between the location of more than one user terminal and the estimated location of the more than one user terminal, the estimated location obtained utilising radio frequency fingerprinting, means for evaluating whether the error is greater than a given threshold, and if so means for determining whether the error is due to radio frequency fingerprinting or not, and means for making decision on updating of radio frequency fingerprinting map based on the determination.

In an embodiment, an apparatus in a communication system comprising means for storing the location of the apparatus; means for estimating location of the apparatus utilising radio frequency fingerprinting; means for calculating the error between the location of apparatus and the estimated location of the apparatus; means for determining whether the error is smaller or equal than a given threshold, if so, means for ignoring the error; if not, means for transmitting to network data on the error between the location of the apparatus and the estimated location of the apparatus and means for receiving from the network information whether updating of radio frequency fingerprinting map is initialised or not.

It will be obvious to a person skilled in the art that, as the technology advances, the inventive concept can be implemented in various ways. The invention and its embodiments are not limited to the examples described above but may vary within the scope of the claims.

**Claims**

1. An apparatus in a communication system, comprising:
   a processor (1200); and a memory (1202) including instructions (1204), the instructions, when executed by the processor, cause the apparatus at least to:

   store (600) the location of the apparatus;
   estimate (602) location of the apparatus utilising radio frequency fingerprinting;
   calculate (604) the error between the location of apparatus and the estimated location of the apparatus; **characterised by**

determine (606) whether the error is smaller or equal than a given threshold,
if so, ignore (608) the error;
if not transmit (610) to network data on the error between the location of the apparatus and the estimated location of the apparatus;
receive (612) from the network information whether updating of radio frequency fingerprinting map is initialised or not.

2.  The apparatus of claim 1, the memory and the computer program code configured to, with the processor, cause the apparatus further to:
average estimation results over several time slots.

3.  The apparatus of claim 1, the memory and the computer program code configured to, with the processor, cause the apparatus further to:
average estimation results over a given time window.

4.  The apparatus of any preceding claim, wherein the apparatus is configured to act in a test mode when updating of radio frequency fingerprinting map is initialised.

5.  A method in an apparatus in a communication system comprising the steps of:

storing (600) the location of the apparatus;
estimating (602) location of the apparatus utilising radio frequency fingerprinting;
calculating (604) the error between the location of apparatus and the estimated location of the apparatus; **characterised by**
determining (606) whether the error is smaller or equal than a given threshold,
if so, ignoring (608) the error;
if not transmitting (610) to network data on the error between the location of the apparatus and the estimated location of the apparatus;
receiving (612) from the network information whether updating of radio frequency fingerprinting map is initialised or not.

6.  The method of claim 5, further comprising:
average estimation results over several time slots.

7.  The method of claim 5, further comprising:
average estimation results over a given time window.

8.  The method of any preceding claim 5 to 7, further comprising:
acting in a test mode when updating of radio frequency fingerprinting map is initialised.

9.  A computer program comprising instructions for causing an apparatus to at least perform:

storing (600) the location of the apparatus;
estimating (602) location of the apparatus utilising radio frequency fingerprinting;
calculating (604) the error between the location of apparatus and the estimated location of the apparatus; **characterised by**
determining (606) whether the error is smaller or equal than a given threshold,
if so, ignoring (608) the error;
if not transmitting (610) to network data on the error between the location of the apparatus and the estimated location of the apparatus;
receiving (612) from the network information whether updating of radio frequency fingerprinting map is initialised or not.

FIG. 1

FIG. 2

FIG. 3

FIG. 4

RECEIVE DATA ⟍500

EVALUATE ⟍502

DETERMINE ⟍504

INITIALISE ⟍506

FIG. 5

STORE LOCATION ⟍600

ESTIMATE LOCATION ⟍602

CALCULATE ERROR ⟍604

ERROR ≤ THRESHOLD ⟍606

IGNORE ERROR ⟍608

YES

NO

TRANSMIT INFO ON ERROR TO NETWORK ⟍610

RECEIVE INFO FROM NETWORK ⟍612

FIG. 6

INFERENCE MODE — 700

OBTAIN
LOCATION WITH
RF FINGERPRINTING — 702

704

POS ERROR
$\leq$
THRESHOLD

YES

NO        708

704

ERROR
DUE TO RSRP
REPORTING

YES

NO        708

INFORM
CAUSE TO
EVALUATION MODULE

710

TRIGGER RF
FINGERPRINTING
IF NEEDED          ← REPORTS FROM
                     OTHER UES

FIG. 7

15

FIG. 8

| | RSRP | RSRQ | RSSI | SINR0 | SINR1 | CQI |
|---|---|---|---|---|---|---|
| RSRQ | 0.6 | 1 | 0.32 | 0.61 | 0.64 | 0.5 |
| RSSI | 0.94 | 0.32 | 1 | 0.63 | 0.75 | 0.6 |
| SINR0 | 0.74 | 0.61 | 0.63 | 1 | 0.89 | 0.7 |
| SINR1 | 0.86 | 0.64 | 0.75 | 0.89 | 1 | 0.74 |

FIG. 9A

FIG. 9B

FIG. 10A

FIG. 10B

FIG. 10C

FIG. 11

FIG. 12

FIG. 13A

FIG. 13B

Europäisches
Patentamt

European
Patent Office

Office européen
des brevets

# EUROPEAN SEARCH REPORT

Application Number

EP 22 15 5841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BUTT M MAJID ET AL: "RF Fingerprinting and Deep Learning Assisted UE Positioning in 5G", 2020 IEEE 91ST VEHICULAR TECHNOLOGY CONFERENCE (VTC2020-SPRING), IEEE, 25 May 2020 (2020-05-25), pages 1-7, XP033786858, DOI: 10.1109/VTC2020-SPRING48590.2020.9128640 [retrieved on 2020-06-29] * the whole document * | 1-9 | INV. G01S5/02 H04W64/00 |
| X | LEE JIN-YOUNG ET AL: "Dnn-Based Wireless Positioning in an Outdoor Environment", 2018 IEEE INTERNATIONAL CONFERENCE ON ACOUSTICS, SPEECH AND SIGNAL PROCESSING (ICASSP), IEEE, 15 April 2018 (2018-04-15), pages 3799-3803, XP033401371, DOI: 10.1109/ICASSP.2018.8462098 [retrieved on 2018-09-10] * the whole document * | 1-9 | |
| A | US 2015/195810 A1 (SUN RONGZE [GB] ET AL) 9 July 2015 (2015-07-09) * paragraph [0229] - paragraph [0233] * | 1-9 | TECHNICAL FIELDS SEARCHED (IPC)<br><br>G01S<br>H04W |
| A | US 2018/372854 A1 (FEIL HENRY [DE] ET AL) 27 December 2018 (2018-12-27) * paragraph [0019] - paragraph [0024] * * paragraph [0044] - paragraph [0060] * | 1-9 | |

The present search report has been drawn up for all claims

| Place of search | Date of completion of the search | Examiner |
|---|---|---|
| Munich | 24 June 2022 | Yanai, Yoav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 15 5841**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-06-2022**

| Patent document cited in search report | | Publication date | Patent family member(s) | | Publication date |
|---|---|---|---|---|---|
| US 2015195810 | A1 | 09-07-2015 | US | 2015195810 A1 | 09-07-2015 |
| | | | WO | 2014006423 A2 | 09-01-2014 |
| US 2018372854 | A1 | 27-12-2018 | DE | 102015225388 A1 | 22-06-2017 |
| | | | EP | 3391071 A1 | 24-10-2018 |
| | | | US | 2018372854 A1 | 27-12-2018 |
| | | | WO | 2017102178 A1 | 22-06-2017 |

EPO FORM P0459

For more details about this annex : see Official Journal of the European Patent Office, No. 12/82